# EUROPEAN PATENT SPECIFICATION

(11) **EP 2 399 077 B1**
(45) Date of publication and mention of the grant of the patent: **25.04.2018**
(21) Application number: 10705430.6
(22) Date of filing: 16.02.2010
(51) Int. Cl.: F24D 19/10, F24D 3/10, F24D 3/12

(54) **CONTROLLING A HEATING/COOLING SYSTEM**
STEUERUNG EINES HEIZ- / KÜHLSYSTEMS
COMMANDE D'UN SYSTÈME DE CHAUFFAGE-REFROIDISSEMENT

(30) Priority: 18.02.2009 FI 20095147
(43) Date of publication of application: 28.12.2011
(73) Proprietor: Uponor Innovation AB, 73061 Virsbo (SE)
(72) Inventor: JONSSON, Ulf, SE-19492 Upplands Väsby (SE)
(74) Representative: Papula Oy
(86) International application number: PCT/IB2010/050682
(87) International publication number: WO 2010/095089

(56) References cited:
- EP-A2- 1 217 311
- DE-A1-102006 052 124
- US-A- 2 268 761
- US-A- 5 622 221

## Description

### BACKGROUND OF THE INVENTION

The invention relates to a method for controlling a hydronic heating/cooling system in which liquid is led along a main supply pipe to a supply manifold and distributed in the manifold into heating loops, the heating loops returning to a return manifold, and at least one of the manifolds having actuators for controlling the flow in the heating loops.

The invention further relates to a hydronic heating/cooling system comprising a main supply pipe, a main return pipe, at least one supply manifold, at least one return manifold, heating loops from the supply manifold to the return manifold, and actuators for controlling the flow in the heating loops arranged to at the supply manifold and/or the return manifold.

Yet further the invention relates to a software product of a control system of a hydronic heating/cooling system in which liquid is led along a main pipe to a supply manifold and distributed in the manifold in to heating loops, the heating loops returning to a return manifold, and at least one of the manifolds having actuators for controlling the flow in the heating loops.

In hydronic heating systems the liquid acting as medium is typically led to a supply manifold, and the heating pipes forming the actual heating loop extend from the supply manifold and, having made a loop in the space to be heated, return to a return manifold. Valves controlling the liquid flow in the heating pipes are arranged to either the supply manifold or return manifold or both. The valves are actuator-operated and the operation of the actuators is controlled by a control system. Controlling the actuators is quite complex, and it is necessary to take into consideration in the control system several things related to temperature control, reliable operation of the system, and acoustic problems caused by the system, for instance. An example of a hydronic heating system is described in the document JP 2001004157.

The document JP 2001336809 discloses a floor heating system comprising a plurality of thermally operated valves. When the thermally operated valves are opened they are energized sequentially in order to minimize the electric inrush current. DE 102006052124 discloses an adjustment system for a floor heating assembly. Concerning claim 8, document DE 102006052124 A1 discloses a software product of a control system of a hydronic heating system in which liquid is led along a main pipe to a supply manifold and distributed in the manifold in to heating loops, the heating loops returning to a return manifold, and at least one of the manifolds having actuators for controlling the flow in the heating loops. US 2268761 discloses a zone temperature control system.

### BRIEF DESCRIPTION OF THE INVENTION

It is an object of the present invention to provide a novel solution for controlling a heating/cooling system.

The method of the invention is characterised by using actuators with fast operating times, and preventing the simultaneous closure of actuator valves in different heating loops.

The system of the invention is characterised in that the actuators have fast operating time and the system comprises means for preventing the simultaneous closure of actuator valves in different heating loops.

The software product of the invention is characterised in that the execution of the software product on a control unit of the control system is arranged to provide the following operations of detecting endings of the duty cycles and preventing the simultaneous closure of actuator valves in different heating loops.

The idea of the invention is that in a hydronic heating/cooling system liquid is led along a main supply pipe to a supply manifold and distributed into heating loops. The heating loops return to a return manifold. At least one of the manifolds has actuators for controlling the flow in the heating loops. Actuators with fast operating times are used and valves of the actuators are controlled to close at different times in different heating loops. Fast actuators provide an extremely versatile control function, and when the valves are controlled to close at different times, hydraulic impacts caused by valve closure cannot become disturbing in view of acoustic problems caused by the piping structure and hydraulic impact.

### BRIEF DESCRIPTION OF THE FIGURES

Some embodiments of the invention are described in greater detail in the attached drawings in which
Figure 1 is a schematic representation of a hydronic heating/cooling system,
Figure 2 is a schematic representation of duty cycles of two actuators in different loops according to one embodiment,
Figure 3 is a schematic representation of duty cycles of two actuators in different loops according to another embodiment, and
Figure 4 is a flow chart describing an operation of a control system controlling a hydronic heating/cooling system.

In the figures, some embodiments of the invention are shown simplified for the sake of clarity. Similar parts are marked with the same reference numbers in the figures.

### DETAILED DESCRIPTION OF THE INVENTION

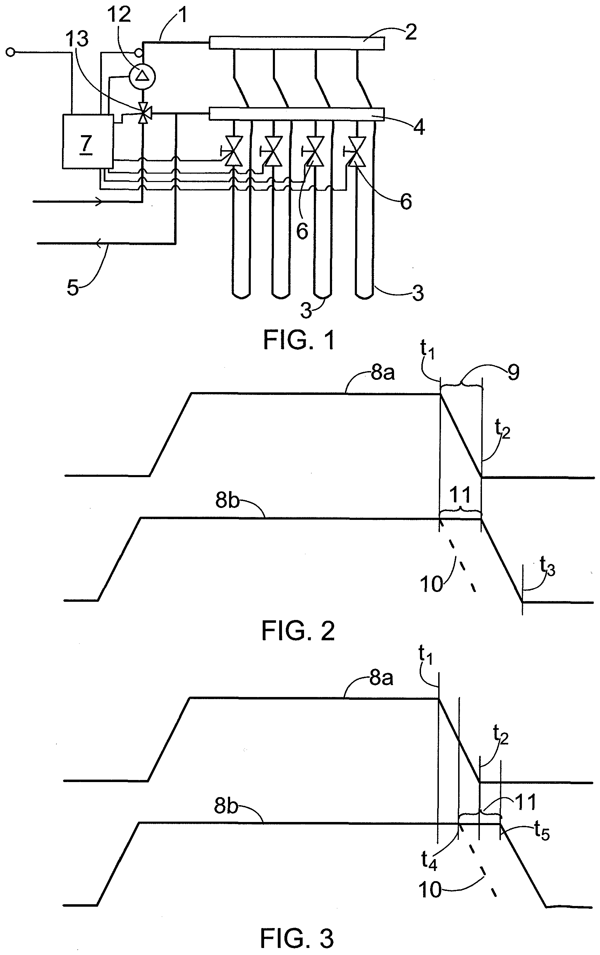

Figure 1 shows a hydronic heating/cooling system. In the system, liquid is led along a main supply pipe 1 to a supply manifold 2. The supply manifold 2 distributes the liquid to several heating loops 3. The heating loops 3 make the liquid to flow through the rooms or spaces to be heated or cooled. If the system is used for heating, the liquid can be warm water, for example. On the other hand, if the system is used for cooling, the liquid flowing in the pipes is cool liquid that cools the rooms or spaces.

The pipes forming the heating loops 3 return to a return manifold 4. From the return manifold 4, the liquid flows back again along a main return pipe 5.

Actuators 6 are arranged to the return manifold 4. The actuators 6 control the flow of the liquid in the loops 3.

A control unit 7 controls the operation of the actuators 6. The actuators 6 can also be arranged to the supply manifold 2. Further, there can be actuators both in the supply manifold 2 and in the return manifold 4. Either one of the manifolds 2 and 4 can further comprise balancing valves. The balancing valves can be manually operated, for example.

The system can also comprise a circulation pump 12 and a connection between the main supply pipe 1 and the main return pipe, the connection being provided with a mixing valve 13. A separate circulation pump 12 and/or a connection between the pipes 1 and 5 is, however, not always necessary.

A hydronic underfloor heating system distributes the needed heating to each room in the building by controlling the hot water flow through a heating loop in the floor. Normally, one loop per room is used but sometimes a large room is split into two or more loops. The controller will act on the information from the room thermostat and accordingly turn the water flow on or off in the floor loop.

The floor loop or heating loop piping is typically made of crosslinked polyethylene plastic pipes, for instance. These pipes can be used in different types of floor constructions, i.e., both concrete and wooden floors can be heated this way. It is essential that the insulation, under the pipes, in the floor construction is good to avoid the leakage of energy out downwards. The floor loop layout depends on the heat demand for each room.

In a concrete floor, typically 20-mm pipes are used, the pipes being usually attached to a re-enforcing net before the final concrete casting. The recommendation is that the top of the pipes should be 30 to 90 mm below the concrete surface and the pipe loops should be placed at a 300-mm center distance. Concrete conducts heat well, so this layout will lead to an even distribution of energy and give an even temperature on the floor surface. This building method using concrete and 20-mm pipes is an economical way of building a UFH (underfloor heating) system.

Due to the good thermal conduction in concrete, the loop can be fed with low supply temperature, normally below 35 degrees Celsius.

The step response is quite slow due to the large mass of the floor, normally between 8 to 16 h depending on the floor thickness.

In wooden floors there are some different construction techniques available and we can divide them into two main categories: floor loops inside the floor construction or on top of the floor construction. It is to be noted that all UFH wood construction techniques use aluminum plates to distribute the heat from the pipes. This compensates for the poor heat conduction in wood. Generally speaking, all "in floor" constructions use 20-mm pipes and the "on floor" technique uses 17-mm pipes that are mounted in pre-grooved floorboards. However, it is self-evident to a person skilled in the art that the diameter of the pipes can also be different and it is determined according to the need and/or requirements set by the system and/or environment.

Due to the poor thermal conduction in a wood floor, the loops need a higher supply temperature than a concrete floor, normally up to 40 degrees Celsius.

The step response is quicker than for concrete, normally between 4 to 6 h depending on the floor construction.

The previously mentioned systems are primarily installed when a house is built. In addition to these, there are UFH systems for after installation. This system focuses on a low building height and the ease of handling, and uses smaller pipe diameters, and the pipes are mounted in pre-grooved polystyrene floor panels. The supply temperature and step response are quite similar to those of wooden constructions.

The actuator 6 can be a conventional mechanical piston valve. The actuator can also be, for example, a solenoid valve. When using a solenoid valve the stroke time of the actuator can be very short. Thus, the stroke time or operating time of the actuator can be for example in the range of 0.1 to 120 seconds. Preferably actuators 6 with fast operating time are used. Thus, the operating time of the actuators 6 is preferably less than 10 seconds.

In the control system, the term "pulse width" refers to the on time of the flow, i.e., the duty cycle. A minimum pulse width is preferred in order to achieve efficient heating. However, the minimum pulse width is preferably determined such that during the duty cycle the longest loop is also filled with supply water. The minimum pulse width means that the time frame of control is quite short, which means high frequency. Preferably, the time frame is shorter than 1/3 of the response time of the floor in the room to be heated. The time frame may vary for example between 5 and 60 minutes. In order to achieve the feature that the duty cycles start at different moments in different loops, the length of the off-times between the duty cycles can be varied using a pattern or randomly. The variation must naturally be carried out within certain limits, such that the percentage of the duty cycles can be kept at a desired value. Another option is to vary the pulse width using a pattern or randomly in a corresponding manner. Yet another option is to use different time frames in different loops. For example, in one loop the time frame can be 29 minutes, in a second loop the time frame can be 30 minutes, and in third loop the time frame can be 31 minutes. Of course sometimes the duty cycles start simultaneously in different loops but using at least one of the above-mentioned systems, the duty cycles start at different moments in most cases. Thus, the object is to prevent the duty cycles in different loops from running synchronously.

The percentage of the duty cycle means how long the on-state of the time frame is. In other words, if the time frame is 10 minutes and the percentage of the duty cycle is 10%, it means that the flow is on for 1 minute and off for 9 minutes, if the percentage is 50 the flow is on for 5 minutes and off for 5 minutes, and if the percentage of the duty cycle is 90, the flow is on for 9 minutes and off for 1 minute. If the time frame is short enough, control can be considered continuous if the system is slow enough, i.e., the response time of the floor is long.

This specification refers to hydronic under surface heating/cooling. In such a system, liquid is supplied to supply loops for cooling/heating. The liquid can be for example water or any other suitable liquid medium. The liquid may comprise glycol, for example. Under surface heating/cooling means that the supply loops are installed under the floor, for example. The supply loops can also be installed in any other suitable structure. The loops may be installed in the wall or ceiling, for example.

In an embodiment an on/off control is combined with pulse width modulation per room. The pulse width depends on the response in the room. At the startup the pulse width is preferably always 50%. The time frame for the pulse width can be 30 minutes, for example. It is important to prevent the different channels/loops from running synchronously. Adding a random value of -30 to +30 seconds to the time frame can prevent this. Another possibility is to have a slightly different time frame for each channel/loop. It is enough if the difference is 5 seconds, for example.

The maximum value for the pulse width is 25 minutes and the minimum value is 5 minutes. The resolution can be 1 minute, for example. Preferably, the pulse width modulation counter is reset by a change of a set point which prevents delays in the system.

A heating cycle is defined as the time between one heating request and the next heating request.

Maximum and minimum room temperatures are monitored and saved during a full heating cycle.

The pulse width is adjusted at timeout, at heat-up modes or after a heating cycle.

The master timeout for pulse width adjustment can be for example 300 minutes.

The control system comprises an appropriate means for performing the desired functions. For example, a channel block calculates the control signal based on the set point, the room temperature and the energy required. The energy is pulse width modulated and the energy requirement is calculated by measuring the characteristics of the room temperature overtime.

One way to describe this is that it is a traditional on/off control with self-adjusting gain.

In an embodiment, the pulse width modulation output can be adjusted between 15 to 70% of the duty cycle. The start value is 50%. The maximum and minimum values during an on/off cycle are stored and evaluated and the duty cycle is adjusted if needed.

The pulse width modulation timer is restarted if the set point increases more than 1 degree, for example.

Figure 2 shows a duty cycle 8a of an actuator. At moment t₁ the control unit 7 gives the actuator 6 a closing command. At moment t₂ the actuator is fully closed. The stroke time or operating time is denoted in the figure with reference numeral 9.

Figure 2 further shows another duty cycle 8b of an actuator in another heating loop. In this case, too, the pulse width of the duty cycle 8b is such that the duty cycle 8b ends simultaneously with the duty cycle 8a at moment t₁ if no extra action is taken. This is denoted in figure 2 with reference numeral 10. However, the control unit 7 detects that in such a case two actuators 6 would close simultaneously. Therefore, the control unit 7 adds a delay 11 to the duty cycle 8b. Because of the added delay 11, the duty cycle 8b is made longer such that the actuator 6 starts to close at moment t₂ and is fully closed at moment t₃. The length of the delay 11 is equal to or greater than the operating time 9 of the actuators. Thus, the simultaneous closure of the actuators in different heating loops is prevented.

Figure 3 shows another case in which the second actuator operating according to the duty cycle 8b is not going to close exactly simultaneously with the first actuator at moment t₁, but the second actuator is going to close at moment t₄. However, because the difference between the moments t₁ and t₄ is shorter than the operating time 9 of the actuators, the closing of the actuators would happen partly simultaneously or overlap. This would also cause acoustic problems and/or hydraulic impacts. Therefore, the control unit 7 adds the delay 11 to the second duty cycle 8b, whereby in this case the simultaneous closure of the actuators is also prevented. Thus, the closure of the second actuator starts at moment t₃ which is after the moment t₂ when the first actuator is fully closed. In this case the length of the delay need not be as long as the operating time 9 but the delay 11 could be shortened by the time between the moments t₄ and t₁. However, adjusting the delay 11 is not necessary, because typically the length of the delay 11 is much shorter than the length of the duty cycles 8a, 8b.

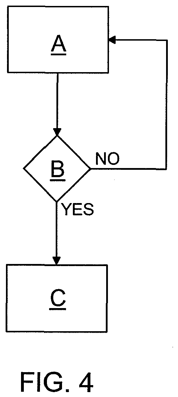

Figure 4 is a flow chart according to the operation of the above-described control system. In block A the endings of the duty cycles are detected. In block B it is analysed whether two or more duty cycles end simultaneously. If the result of this analyzation is "no", the loop returns the block A. However, if two or more duty cycles end simultaneously the procedure continues to block C. Block C comprises the step that the simultaneous ending of the duty cycles is prevented. Thus, in block C a delay is added to at least one duty cycle, for example.

The control unit 7 can comprise a software product whose execution on the control unit 7 is arranged to provide at least some of the above-described operations. The software product can be loaded onto the control unit 7 from a storage or memory medium, such as a memory stick, a memory disc, a hard disc, a network server, or the like, the execution of which software product in the processor of the control unit or the like produces operations described in this specification for controlling a hydronic heating/cooling system.

Preventing the simultaneous closure of the actuators limit pressure changes in the pipes. Limiting the pressure changes prevents noise problems. The difference between the closing commands given by the control unit 7 to the actuators 6 should thus be at least as long as the operating time 9 of the actuators. Preventing the simultaneous opening of the actuators also reduces pressure changes and thus prevents noise problems. Thus, applying the operation using delays described in connection with figures 2 and 3 can also be applied to the starting moment of the duty cycles 8a, 8b.

In some cases the features described in this application can be used as such regardless of other features. The features described in this application may also be combined as necessary to form various combinations.

The drawings and the related description are only intended to illustrate the idea of the invention. The invention may vary in detail within the scope of the claims.

## Claims

1. A method for controlling a hydronic heating/cooling system in which liquid is led along a main supply pipe (1) to a supply manifold (2) and distributed in the manifold (2) into heating loops (3), the heating loops (3) returning to a return manifold (4), and at least one of the manifolds (2,4) having actuators (6) for controlling the flow in the heating loops (3), **characterised by** using said actuators (6) which have operating times of less than 10 seconds, detecting the endings of duty cycles (8a, 8b), detecting if two or more duty cycles (8a, 8b) end substantially simultaneously and if this is the case, adding a delay to at least one duty cycle (8b) to prevent the simultaneous closure of actuator valves in different heating loops (3).

2. A method according to claim 1, **characterised in that** the duty cycles (8a, 8b) are defined to end substantially simultaneously if the difference between the ends of the duty cycles (8a, 8b) is shorter than an operation time (9) of the actuators (6).

3. A method according to claim 1 or 2, **characterised in that**
the length of the delay (11) is equal to or longer than the operation time (9) of the actuators (6).

4. A method according to any one of the preceding claims, **characterised in that**
the actuators (6) control the flow in the heating loops on and off such that during a duty cycle the flow is high and between the duty cycles the flow is off.

5. A method according to any one of the preceding claims, **characterised in that**
the duty cycles (8a, 8b) in different heating loops (3) overlap partly.

6. A hydronic heating/cooling system comprising a main supply pipe (1), a main return pipe (5), at least one supply manifold (2), at least one return manifold (4), heating loops (3) from the at least one supply manifold (2) to the at least one return manifold (4), and actuators (6) for controlling the flow in the heating loops (3) arranged to at the at least one supply manifold (2) and/or the at least one return manifold (4), **characterised in that** said actuators have operating times less than 10 seconds, and the system comprises means for detecting the endings of duty cycles (8a, 8b) and means for adding a delay to at least one duty cycle (8b) if two or more duty cycles (8a, 8b) end substantially simultaneously to prevent the simultaneous closure of actuator valves in different heating loops (3).

7. A system according to claim 6, **characterised in that** the actuators (6) are arranged to control the flow in the heating loops (3) on and off such that during the duty cycle the flow is high and between the duty cycles the flow is off.

8. A software product of a control system of a hydronic heating/cooling system in which liquid is led along a main pipe (1) to a supply manifold (2) and distributed in the manifold (2) in to heating loops (3), the heating loops (3) returning to a return manifold (4), and at least one of the manifolds (2, 4) having actuators (6) for controlling the flow in the heating loops (3), wherein the actuators (6) have operating times of less than 10 seconds, and the execution of the software product on a control unit (7) of the control system is arranged to provide the operation of
detecting endings of the duty cycles (8a, 8b); and
detecting if two or more duty cycles (8a, 8b) end substantially simultaneously and if this is the case, adding a delay to at least one duty cycle (8b) to prevent the simultaneous closure of actuator valves in different heating loops (3).

## Patentansprüche

1. Verfahren zum Steuern eines hydronischen Heiz-/Kühlsystems, in dem Flüssigkeit entlang eines Hauptzufuhrohrs (1) an einen Zufuhrverteiler (2) geführt und in dem Verteiler (2) in Heizschleifen (3) verteilt wird, wobei die Heizschleifen (3) an einen Rücklaufverteiler (4) rückgeführt sind, und zumindest einer der Verteiler (2, 4) Aktuatoren (6) zum Steuern des Flusses in den Heizschleifen (3) aufweist,
**gekennzeichnet durch** das Verwenden dieser Aktuatoren (6), die Betriebszeiten von unter 10 Sekunden haben, Detektieren der Endzeitpunkte von Lastzyklen (8a, 8b), Detektieren, ob zwei oder mehr Lastzyklen (8a, 8b) im Wesentlichen gleichzeitig enden, und falls dies zutrifft, Hinzuaddieren einer Verzögerung zu zumindest einem Lastzyklus (8b), um das gleichzeitige Schließen von Aktuatorventilen in unterschiedlichen Heizschleifen (3) zu verhindern.

2. Verfahren nach Anspruch 1, **dadurch gekennzeichnet, dass** die Lastzyklen (8a, 8b) definiert sind, so dass sie im Wesentlichen gleichzeitig enden, falls die Differenz zwischen den Enden der Lastzyklen (8a, 8b) kürzer ist als eine Betriebszeit (9) der Aktuatoren (6).

3. Verfahren nach Anspruch 1 oder 2, **dadurch gekennzeichnet, dass** die Länge der Verzögerung (11) gleich oder länger ist als die Betriebszeit (9) der Aktuatoren (6).

4. Verfahren nach einem der vorstehenden Ansprüche, **dadurch gekennzeichnet, dass**
die Aktuatoren (6) den Fluss in die Heizschleifen derart Ein und Aus steuern, dass der Fluss während eines Lastzyklus hoch ist und der Fluss zwischen den Lastzyklen Aus ist.

5. Verfahren nach einem der vorstehenden Ansprüche, **dadurch gekennzeichnet, dass**
sich die Lastzyklen (8a, 8b) in unterschiedlichen Heizschleifen (3) zum Teil überschneiden.

6. Hydronisches Heiz/Kühlsystem, aufweisend ein Hauptzufuhrrohr (1), ein Hauptrücklaufrohr (5), zumindest einen Zufuhrverteiler (2), zumindest einen Rücklaufverteiler (4), Heizschleifen (3) von dem zumindest einen Zufuhrverteiler (2) an den zumindest einen Rücklaufverteiler (4), und Aktuatoren (6) zum Steuern des Flusses in die Heizschleifen (3), die an dem zumindest einen Zufuhrverteiler (2) und/oder dem zumindest einen Rücklaufverteiler (4) angeordnet sind, **dadurch gekennzeichnet, dass**
diese Aktuatoren Betriebszeiten von weniger als 10 Sekunden haben, und das System Mittel zum Detektieren der Endzeitpunkte von Lastzyklen (8a, 8b) und Mittel zum Hinzuaddieren einer Verzögerung zu zumindest einem Lastzyklus (8b) aufweist, falls zwei oder mehr Lastzyklen (8a, 8b) im Wesentlichen gleichzeitig enden, um das gleichzeitige Schließen von Aktuatorventilen in unterschiedlichen Heizschleifen (3) zu verhindern.

7. System nach Anspruch 6, **dadurch gekennzeichnet, dass** die Aktuatoren (6) angeordnet sind, um der Fluss in die Heizschleifen (3) derart auf Ein und Aus zu steuern, dass der Fluss während des Lastzyklus hoch ist und der Fluss zwischen den Lastzyklen Aus ist.

8. Softwareprodukt eines Steuerungssystems eines hydronischen Heiz/Kühlsystems, in dem Flüssigkeit entlang eines Hauptrohrs (1) an einen Zufuhrverteiler (2) geführt und in dem Verteiler (2) in Heizschleifen (3) verteilt wird, wobei die Heizschleifen (3) an einen Rücklaufverteiler (4) rückgeführt sind, und zumindest einer der Verteiler (2, 4) Aktuatoren (6) zum Steuern des Flusses in den Heizschleifen (3) aufweist, wobei die Aktuatoren (6) Betriebszeiten von weniger als 10 Sekunden haben, und die Ausführung des Softwareprodukts auf einer Steuereinheit (7) des Steuersystems eingerichtet ist, folgende Operationen bereitzustellen:
Detektieren von Endzeitpunkten der Lastzyklen (8a, 8b); und
Detektieren, ob zwei oder mehr Lastzyklen (8a, 8b) im Wesentlichen gleichzeitig enden, und falls dies der Fall ist, Hinzuaddieren einer Verzögerung zu zumindest einem Lastzyklus (8b), um das gleichzeitige Schließen von Aktuatorventilen in unterschiedlichen Heizschleifen (3) zu verhindern.

## Revendications

1. Procédé de commande d'un système de chauffage/refroidissement hydronique, dans lequel un liquide est guidé le long d'un tuyau d'alimentation principal (1) vers un collecteur d'alimentation (2) et distribué dans celui-ci à des boucles de chauffage (3), les boucles de chauffage (3) retournant à un collecteur de retour (4), et au moins un des collecteurs (2, 4) ayant des actionneurs (6) pour commander l'écoulement dans les boucles de chauffage (3), **caractérisé par** l'utilisation desdits actionneurs (6), qui ont des durées de fonctionnement inférieures à 10 secondes, pour détecter des fins de cycles de service (8a, 8b), détecter si deux ou plusieurs cycles de service (8a, 8b) se terminent sensiblement simultanément et si cela est cas, ajouter un délai à l'au moins un cycle de service (8b) pour empêcher la fermeture simultanée de vannes d'actionneurs dans différentes boucles de chauffage (3).

2. Procédé suivant la revendication 1, **caractérisé en ce que** les cycles de service (8a, 8b) sont définis de sorte à se terminer essentiellement simultanément si la différence entre les fins des cycles de service (8a, 8b) est plus courte qu'une durée de fonctionnement (9) des actionneurs (6).

3. Procédé suivant la revendication 1 ou 2, **caractérisé en ce que** la longueur du délai (11) est égale ou supérieure à la durée de fonctionnement (9) des actionneurs (6).

4. Procédé suivant une quelconque des revendications précédentes, **caractérisé en ce que** les actionneurs (6) commandent l'alimentation ou l'arrêt de l'écoulement dans les boucles de chauffage de telle sorte que pendant un cycle de service l'écoulement est élevé et entre les cycles de service l'écoulement est arrêté.

5. Procédé suivant une quelconque des revendications précédentes, **caractérisé en ce que** les cycles de service (8a, 8b) se chevauchent partiellement dans différentes boucles de chauffage.

6. Système de chauffage/refroidissement hydronique comprenant un tuyau d'alimentation principal (1), un tuyau de retour principal (5), au moins un collecteur d'alimentation (2), au moins un collecteur de retour (4), des boucles de chauffage (3) allant de l'au moins un collecteur d'alimentation (2) à l'au moins un collecteur de retour (4) et des actionneurs (6) pour commander l'écoulement dans les boucles de chauffage (3) prévus à l'au moins un collecteur d'alimentation (2) et/ou à l'au moins un collecteur de retour (4), **caractérisé en ce que** lesdits actionneurs ont des durées de fonctionnement inférieures à 10 secondes, et le système comprend des moyens pour détecter les fins de cycles de service (8a, 8b) et des moyens pour ajouter un délai à l'au moins un cycle de service (8b) si deux ou plusieurs cycles de service (8a, 8b) se terminent essentiellement simultanément pour empêcher la fermeture simultanée de vannes d'actionneurs dans différentes boucles de chauffage (3).

7. Système suivant la revendication 6, **caractérisé en ce que** les actionneurs (6) sont prévus pour commander l'alimentation et l'arrêt de l'écoulement dans les boucles de chauffage (3) de telle sorte que, pendant le cycle de service, l'écoulement est élevé, et, entre les cycles de service, l'écoulement est arrêté.

8. Produit logiciel d'un système de commande d'un système de chauffage/refroidissement hydronique, dans lequel un liquide est guidé le long d'un tuyau principal (1) vers un collecteur d'alimentation (2) et distribué dans celui-ci à des boucles de chauffage (3), les boucles de chauffage (3) retournant à un collecteur de retour (4) et au moins un des collecteurs (2, 4) ayant des actionneurs (6) pour commander l'écoulement dans les boucles de chauffage (3), les actionneurs (6) ayant des durées de fonctionnement inférieures à 10 secondes, et l'exécution du produit logiciel est prévue sur une unité de commande (7) du système de commande afin d'assurer les opérations consistant à
détecter des fins de cycles de service (8a, 8b) et
détecter si deux ou plusieurs cycles de service (8a, 8b) se terminent sensiblement simultanément et, si cela est le cas, ajouter un délai à l'au moins un cycle de service (8b) pour empêcher la fermeture simultanée de vannes d'actionneurs dans différentes boucles de chauffage (3).
